# EUROPEAN PATENT APPLICATION

(11) **EP 2 399 816 A1**
(43) Date of publication of application: **28.12.2011**
(21) Application number: 11005049.9
(22) Date of filing: 21.06.2011
(51) Int. Cl.: B62K 27/02, B62K 27/12

(54) **An add-on carriage for bicycles**

(30) Priority: 23.06.2010 IT RN20100037
(71) Applicant: Guagneli, Antonio, 47855 Gemmano (RN) (IT); Guerra, Claudio, 47814 Igea Marina (RN) (IT); Bianchi, Paolo, 47039 Savignano sul Rubicone (FO) (IT)
(72) Inventor: Guagneli, Antonio, 47855 Gemmano (RN) (IT); Guerra, Claudio, 47814 Igea Marina (RN) (IT); Bianchi, Paolo, 47039 Savignano sul Rubicone (FO) (IT)
(74) Representative: Paolizzi, Marco

(57) **Abstract**

An add-on carriage for bicycles comprises a supporting frame (2), exhibiting at least one wheel (6) and a portion (2b) for supporting a load, and a connecting bar (8) for realising a reversible coupling of the supporting frame (2) to a bicycle (100), wherein the connecting bar (8) exhibits, at ends thereof, respectively a first and a second connecting element (9, 10), applicable to different portions of the bicycle (100), and wherein the connecting elements (9, 10) are movable towards and away from each other in order to realise a clamped blocking of the connecting bar (8) on different portions of the bicycle (100).

## Description

The present invention relates to an add-on carriage for use coupled to a bicycle.

The add-on carriage of the invention is especially configured such as to connect removably to a bicycle in order to be drawn by the movement of the bicycle itself.

Carriages for bicycles are known, destined for use as sidecars, which are connected to the frame of a bicycle and exhibit a portion designed for use as a seat or a bench for supporting a load.

These carriages, once applied to the frame of the bicycle, are arranged in a flanked position to the bicycle and increase the transversal size thereof. Examples of such carriages are described, for example in documents US6311997, W02005077742 and US2537258. Carriages at present known, however, exhibit some drawbacks.

Firstly, they often require use of specific adaptors to be fixed to the frame of the bicycle such as to enable application of the carriage.

Further, carriages at present known are very large and once demounted from the bicycle require a considerable space to be stored.

A further drawback of the known carriages is their poor flexibility of use, as the attachment points for connection to the frame of the bicycle are invariable and thus, where they are designed with a particular bicycle model in mind, the connection of the carriage to bicycles of different models can be precluded.

In this context, the technical task underpinning the present invention is to provide an add-on carriage for bicycles which obviates the drawbacks in the prior art as cited above.

In particular, an aim of the present invention is to disclose an add-on carriage for bicycles which is simply applicable to the frame of a bicycle and, in particular, does not require specific adaptors or permanent interventions on the bicycle frame.

A further aim of the present invention is to make available an add-on carriage for bicycles which exhibits a high level of use flexibility and, in particular, which is applicable to a plurality of different bicycle models.

A further aim of the present invention is to make available an add-on carriage for bicycles which is of contained dimensions, in particular in the storing configuration once demounted from the bicycle.

The set technical task and the specified aims are all substantially attained by an add-on carriage for bicycles comprising the technical characteristics set down in one or more of the accompanying claims. Further characteristics and advantages of the present invention will better emerge from the indicative nonlimiting description of a preferred but not exclusive embodiment of an add-on carriage for bicycles, as illustrated in the accompanying figures of the drawings, in which:
- figure 1 is a perspective view of a carriage according to the present invention, applied to a bicycle;
- figure 2 is a lateral view of the carriage of figure 1, applied to a bicycle;
- figure 3 is a perspective view of the carriage of figure 1, in which the bicycle has been omitted;
- figure 4 is a perspective view, partially exploded, of the carriage of figure 3;
- figure 5 is a perspective view of a detail of figure 4, illustrating an embodiment of blocking means of the reciprocal rotation between the support frame of the carriage and the relative connecting bar.

In accordance with the accompanying figures, 1 denotes in its entirety an add-on carriage for bicycles according to the present invention.

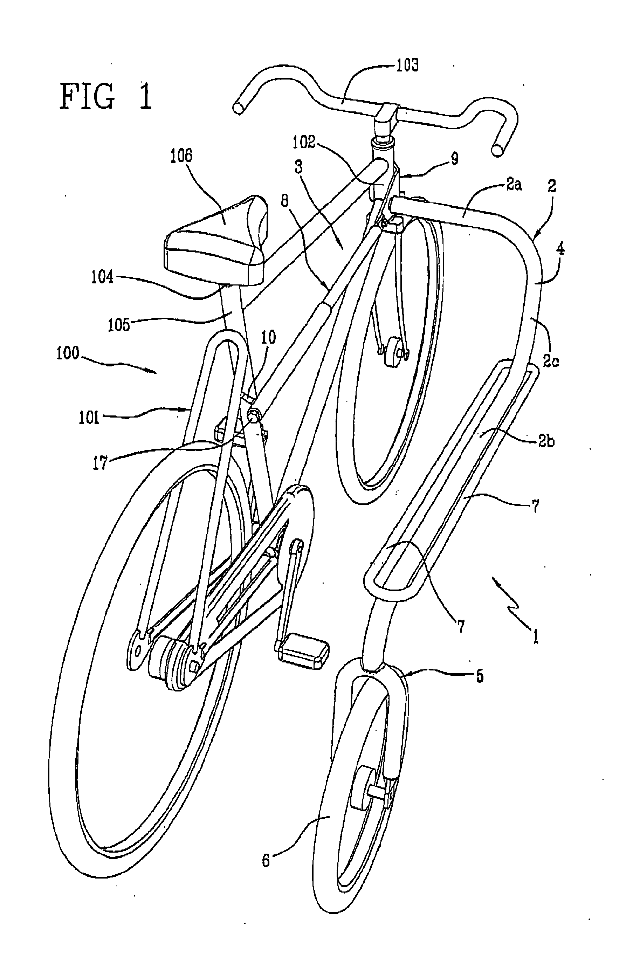

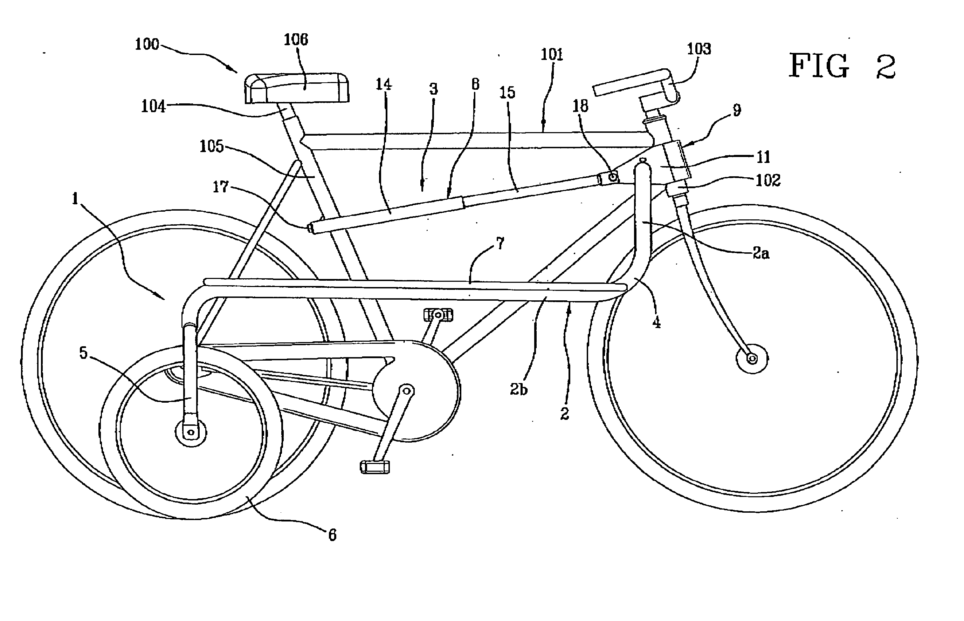

The carriage 1 comprises a supporting frame 2 and connecting means, connected to the support frame 2 and removably connected to the frame 101 of a bicycle 100 (figures 1 and 2) such as to realise a stable coupling of the supporting frame 2 to the bicycle 100.

The supporting frame 2 is preferably at least partly defined by a tubular body 4 and is preferably realised in a single piece, for example made of metal.

The tubular body 4 terminates at an end with a fork 5, which rotatably supports a supporting wheel 6.

At the other end, as will be described herein below, the tubular body 4 is applied to the frame 101 of a bicycle 100.

The supporting frame 2 comprises at least a first portion 2a defined by a preferably straight portion of the tubular body 4, and a second portion 2b, also defined by a preferably straight portion of the tubular body 4 and arranged transversally to the first portion 2a.

In greater detail, the first portion 2a is arranged parallel to the rotation axis "X" of the supporting wheel 6 while the second portion 2b is arranged perpendicular to the rotation axis "X".

Between the first and the second portion 2a, 2b a third portion 2c is preferably interposed, which can also be defined by a straight portion of the tubular body 4 and is preferably arranged perpendicularly to both the first and the second portion 2a, 2b.

Connecting portions can be included, between the first, second and third portion 2a, 2b, 2c (figure 1).

The fork 5 departs from the second portion 2b in a transversal direction thereto, and in particular downwards in an operating configuration of the carriage 1 (figure 1).

In a preferred embodiment, the second portion 2b of the supporting frame 2 defines a supporting portion on which a load or a seat for transport of a person can be applied.

To realise this, the second portion 2b of the supporting frame 2 can be equipped with a pair of additional bars 7 defining, in reciprocal cooperation, a support plane for a load.

The two additional bars 7 are solidly constrained to the tubular body 4, for example by welding, and are preferably parallel to one another.

There follows a detailed description of the connecting means 3 for connecting the supporting frame 2 to the bicycle 100.

The connecting means 3 comprise a connecting bar 8 having at ends thereof, respectively, a first and a second connecting element 9, 10 applicable to different portions of the frame 101 of the bicycle 100.

The connecting elements 9, 10 are conformed such as to grip to respective portions of the frame 101 of the bicycle 100, and in particular to tubes of the frame 101.

In greater detail, each connecting element 9, 10 comprises a curved portion for at least partially embracing the respective portion (tube) of the bicycle 100 to which it is applied.

As visible in figures 1 and 2, a first connecting element 9 is conformed such as to tighten about the steering tube 102 of the handlebars 103 of the bicycle 100 while the other connecting element 10 is conformed such as to tighten about the supporting tube 104 of the saddle 106 of the bicycle 100 or, alternatively, to the tube 105 of the frame 101 of the bicycle 100 in which the supporting tube 104 of the saddle 106 is housed.

In the specific embodiment illustrated, the first connecting element comprises a flat portion 11 to which a curved portion 12 is solidly associated, the curved portion 12 defining the gripping element on the tube 102.

Differently, the second connecting element 10, in the illustrated embodiment, is made by means of a hook-profiled tube which is welded to the connecting bar 8. The two connecting elements 9, 10 exhibit facing concavities in order to be able to embrace the frame 101 of the bicycle 100 in a clamp-like arrangement at the above-mentioned portions of the frame 101.

The two connecting elements 9, 10 are advantageously movable towards and away from each other in order to realise the above-mentioned clamp-blocking of the connecting bar 8 on the different portions of the frame 101 of the bicycle 100.

To realise this, the connecting bar 8 is telescopic and exhibits adjusting means 13 of the reciprocal distance between the two connecting elements 9, 10.

In greater detail, the connecting bar 8 comprises a first 14 and a second 15 tubular tract, both preferably straight, and slidably connected to one another by means of a reciprocal insertion. The two tubular tracts 14, 15 are internally hollow and the adjusting means 13, preferably of a threaded type, are inserted internally thereof.

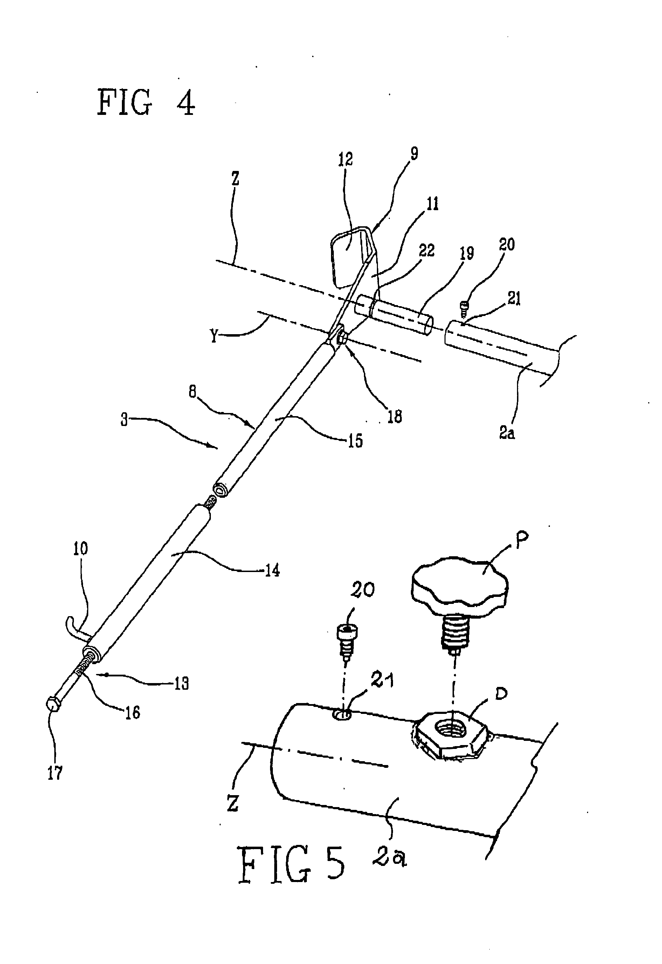

In the illustrated embodiment, as can be clearly seen in figure 4, the adjusting means 13 comprise a threaded rod 16 passing internally of a first 14 of two tubular tracts and screwingly coupled to the other tubular tract 15. The threaded rod 16 exhibits a free end close to said tubular tracts 14, 15 on which a lock nut 17 is realised, manoeuvrable such as to realise a screwing/unscrewing of the threaded rod 16 and such as to adjust the reciprocal position of the two tubular tracts 14, 15.

The connecting bar 8 preferably exhibits an intermediate hinge 18 for enabling reciprocal rotation of the connecting elements 9, 10 at least about an axis "Y" that is preferably perpendicular to the direction of movement of the connecting elements 9, 10 towards/away from each other. This degree of rotational freedom enables a greater ease of engagement of the connecting bar 8 to the frame 101 of the bicycle 100, as well as a greater adaptability to the various conformations of the frame 101.

When the two connecting elements 9, 10 are moved towards each other in order to realise the clamped gripping of the connecting bar 8 on the said different portions of frame 101 of the bicycle 100, the connecting bar 8 advantageously tends to enter into traction and become rigid, and forces are exerted on the intermediate hinge 18 which prevent rotation thereof.

The intermediate hinge 18 is preferably interposed between one of the two tubular tracts 14, 15 and the corresponding connecting element 9, 10 adjacent thereto.

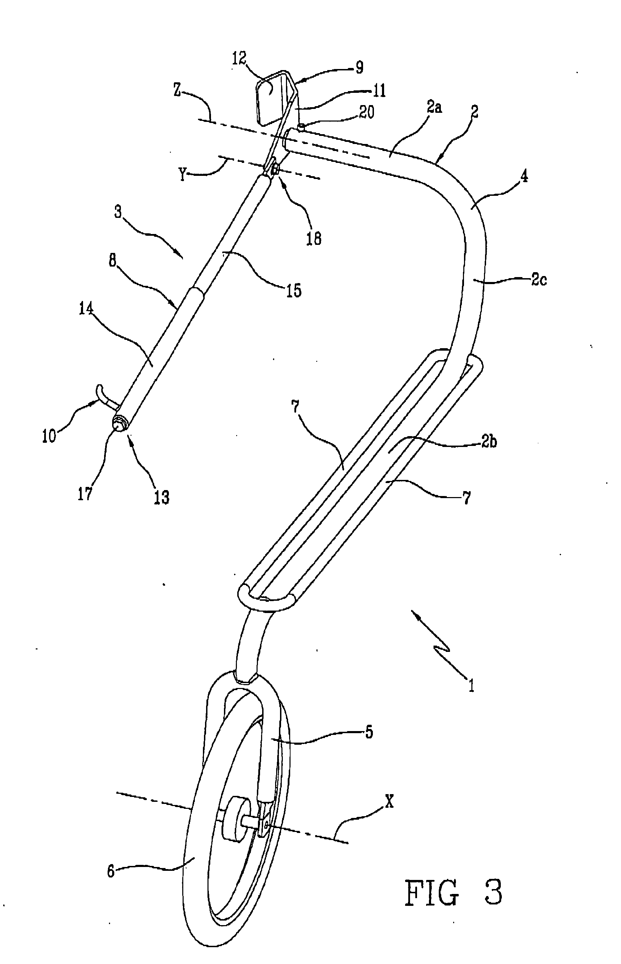

In more detail, in the illustrated embodiment (figure 3), the intermediate hinge 18 is interposed between the flat portion 11 of the first connecting element 9 and the corresponding tubular tract 15 adjacent thereto. Further, the supporting frame 2 is hinged to the connecting bar 8 such as to rotate, with respect to the connecting bar 8, about an axis "Z" which is substantially parallel to the rotation axis "X" of the supporting wheel 6.

In greater detail, the supporting frame 2 is hinged to the connecting bar 8 at one of the connecting elements 9, 10, and in particular to the flat portion 11 of the first connecting element 9.

This connection can be achieved by realising, on the flat portion 11, a cylindrical plug 19 fixed to the flat portion 11 and keying the free end of the first portion 2a of the supporting frame 2 on the cylindrical plug 19.

Appropriate systems can further be provided in order to prevent an accidental disengagement of the supporting frame 2 from the cylindrical plug 19. For example, a system adopted comprises a pivot 20 inserted in a corresponding hole 21 realised on the first portion 2a of the supporting frame 2 and engaged in an annular groove 22 realised on the cylindrical plug 19. The engaging of the pivot 20 in the groove 22 enables reciprocal rotation between the first portion 2a of the supporting frame 2 and the cylindrical plug 19, while preventing any reciprocal disengagement.

The hinged connection between the supporting frame 2 and the connecting bar 8, by rotation about an axis "Z" parallel to the rotation axis "X" of the supporting wheel 6 (thus normally horizontal or substantially horizontal), enables the supporting frame 2 to absorb the irregularities of the terrain without hampering the normal functioning movement of the bicycle 100.

Further, as during the use of the bicycle 100 the bicycle 100 and the carriage 1 reciprocally rotate about the axis "Z" parallel to the rotation axis "X" of the supporting wheel 6, the hinged connection between the supporting frame 2 and the connecting bar 8 also enables the supporting wheel 6 to be maintained resting on the terrain, even when the bicycle 100 is ridden around a bend, by inclining the bicycle 100 with respect to the vertical to the terrain.

In this configuration, the first portion 2a develops along the axis "Z" away from the flat portion 11 of the first connecting element 9.

Further, the carriage 1 can advantageously be equipped with blocking means of the reciprocal rotation between the supporting frame 2 and the connecting bar 8.

In this circumstance, when the blocking means are activated, the bicycle 100 can proceed with three resting wheels, the rotation axes of which are irremovably related to one another and therefore define a true and proper tricycle provided with a high level of drive stability. Further, activating the blocking means during the parking and/or stationary stage of the bicycle 100 requires no use of any additional support or stand.

The blocking means can, for example, be realised with a clamp (not illustrated) applied to the flat portion 11 of the first connecting element 9 and destined to receive internally thereof the first portion 2a of the supporting frame 2 such that by tightening the clamp a stable (and reversible) blocking of the frame 2 to the connecting bar 8 is realised.

Figure 5 illustrates a variant of the blocking means. It comprises the use of a threaded wing nut P, which inserts in a threaded hole realised in the free end of the first portion 2a of the support frame 2 keyed on the cylindrical plug 19. The threaded wing nut P can be screwed into it up to pressing on the plug 19 such as to block the reciprocal rotation between the first portion 2a and the cylindrical plug 19. The threaded hole can be realised, for example, by welding a threaded nut D onto the first portion 2a of the supporting frame 2 at a relative through-hole.

In an operating configuration mounted on a bicycle 100, as can also be seen in figure 2, the first portion 2a of the supporting frame 2 is arranged substantially horizontally (like the axis "X" of the supporting wheel 6), the second portion 2b is arranged substantially along the ground (indicatively, as it depends on the height of the attachment point of the carriage 1 to the frame 101 of the bicycle 100), while the third portion 2c is arranged transversally to the ground, and generally almost perpendicularly in order to define a rise in height with respect to the ground between the first portion 2a and the second portion 2b.

With the aim of enabling the connection of the carriage 1 to a bicycle 100 of standard type, the connecting bar 8 has a variable length between a minimum, comprised between 46 and 49 cm, and a maximum, comprised between 62 and 65 cm. This length is measured between the internal surfaces of the above-mentioned connecting elements 9, 10 (and in particular between the respective curved portions destined to enter into contact with the frame 101 of the bicycle 100).

The variation in length between the above-cited minimum and maximum values is obtained, as described herein above, via the threaded adjusting means 13.

The present invention attains the set aims and obviates the drawbacks of the prior art.

The special structure of the connecting means, realised by means of a bar that is adjustable in length, enables application of the carriage to bicycles of different models and without any need to avail of specific engaging means or perform permanent interventions on the bicycle itself.

The particular structure of the connecting elements means that the tubes already mounted on the bicycle can be exploited, with the connecting elements gripping thereto with a clamp action.

As the special hinged joint between the supporting frame and the connecting bar is made in a single point and enables rotation about a substantially horizontal axis, it enables the supporting frame to absorb bumps in the road during movement, being subjected only to displacements in a vertical direction, without transmitting lateral forces to the bicycle.

Further, the configuration of the carriage, with the connecting bar being positionable parallel to the second portion of the supporting frame (the supporting frame having a preferably greater length than the other portions, being destined to support the load), enables a rationalisation of the overall dimensions which are smaller, with obvious advantages when storing the carriage.

## Claims

1. An add-on carriage for bicycles, comprising:
- a supporting frame (2), comprising at least one supporting wheel (6) and a portion (2b) for supporting a load;
- connecting means (3), connected to the supporting frame (2) and removably connectable to the frame (101) of a bicycle (100) for stably coupling the supporting frame (2) to the bicycle (100);
**characterised in that** the connecting means (3) comprise a connecting bar (8) having at its ends, respectively, a first and a second connecting element (9, 10) which can be applied to different portions of the bicycle (100), the first and second connecting elements (9, 10) being movable towards and away from each other for clamping the connecting bar (8) on said different portions of the bicycle (100).

2. The carriage according to claim 1, wherein the connecting bar (8) is of the telescopic type and comprises adjusting means (13), preferably threaded, for adjusting the distance between the connecting elements (9, 10).

3. The carriage according to claim 1 or 2, wherein each of the connecting elements (9, 10) comprises a curved portion designed to at least partly surround the respective portion of the bicycle (100) to which it is applied.

4. The carriage according to any of the foregoing claims, wherein the connecting bar (8) comprises an intermediate hinge (18) for allowing the connecting elements (9, 10) to rotate relative to each other at least about an axis (Y) preferably perpendicular to the direction of movement of the connecting elements (9, 10) towards/away from each other.

5. The carriage according to any of the foregoing claims, wherein the supporting frame (2) is hinged to the connecting bar (8) in such a way that it can rotate, relative to the connecting bar (8), about an axis (Z) which is substantially parallel with the axis of rotation (X) of the supporting wheel (6).

6. The carriage according to any of the foregoing claims, wherein the supporting frame (2) is hinged to the connecting bar (8) at one of the connecting elements (9, 10).

7. The carriage according to claim 5 or 6, also comprising means, preferably of the clamp type, for blocking reciprocal rotation of the supporting frame (2) and the connecting bar (8).

8. The carriage according to claim 5, wherein the supporting frame (2) comprises a first portion (2a), extending along the axis of rotation (Z) between the supporting frame (2) and the connecting bar (8), and a second portion (2b) extending perpendicularly to the first portion (2a) and ending, at one end, with a fork (5) for supporting the supporting wheel (6).

9. The carriage according to any of the foregoing claims, wherein the second portion (2b) of the supporting frame (2) is substantially straight and is equipped with a pair of additional bars (7) which are preferably parallel, forming, in conjunction with each other, a surface for supporting a load.

10. The carriage according to any of the foregoing claims, wherein the supporting frame (2) is of the single-piece type and is preferably formed by a tubular body.

11. A bicycle equipped with a carriage (1) according to any of the foregoing claims, wherein a first (9) of the connecting elements (9, 10) is connected to the steering tube (102) of the handlebars (103) of the bicycle (100) and wherein the other connecting element (10) is connected to a supporting tube (104) for the saddle (106) of the bicycle (100) or to a tube (105) of the frame (101) of the bicycle (100) housing said supporting tube (104) for the saddle (106).
